# EUROPEAN PATENT SPECIFICATION

(11) **EP 3 372 507 B1**
(45) Date of publication and mention of the grant of the patent: **24.06.2020**
(21) Application number: 18160811.8
(22) Date of filing: 08.03.2018
(51) Int. Cl.: B64D 41/00, B64D 33/02

(54) **AIR INTAKE ASSEMBLY WITH HORIZONTAL DOOR FOR AN AIRCRAFT AUXILIARY POWER UNIT**
LUFTEINLASSANORDNUNG MIT HORIZONTALER TÜR FÜR EIN FLUGZEUGHILFSTRIEBWERK
ENSEMBLE D'ADMISSION D'AIR COMPORTANT UNE PORTE HORIZONTALE POUR UNE UNITÉ D'ALIMENTATION AUXILIAIRE D'UN AVION

(30) Priority: 09.03.2017 US 201715454695
(43) Date of publication of application: 12.09.2018
(73) Proprietor: United Technologies Corporation, Farmington, CT 06032 (US)
(72) Inventor: LIU, Xuejun, Avon, CT 06001 (US)
(74) Representative: Dehns

(56) References cited:
- EP-A1- 2 865 599
- EP-A2- 1 069 044
- WO-A1-2015/054334
- US-A1- 2013 037 122
- US-B1- 6 264 137

## Description

### BACKGROUND OF THE INVENTION

### 1. Technical Field

This disclosure relates generally to an aircraft system and, more particularly, to an air intake assembly for an auxiliary power unit.

### 2. Background Information

A typical auxiliary power unit for an aircraft receives air for combustion through an air intake assembly. This assembly may include a door on the outside of the airplane fuselage for opening and closing an inlet orifice. When the door is closed, air outside of the airplane fuselage cannot flow into the inlet orifice and to the auxiliary power unit. By contrast, when the door is open, air outside of the airplane fuselage may flow into the inlet orifice and to the auxiliary power unit.

A typical air intake assembly door pivots about a generally vertical pivot axis to open and close the inlet orifice. This enables the door to function as a ram scoop when the auxiliary power unit must be operated during flight. However, such an arrangement leaves the inlet orifice susceptible to ice accumulation for ground operation. For example, when the airplane is at an airport gate, rain, snow, etc. may fall directly into the inlet orifice and freeze to the air intake assembly. This accumulation of ice reduces airflow to the engine. In addition, chunks of accumulated ice may break off and enter the auxiliary power unit. The ice can cause mechanical damage to the compressor blades.

There is a need in the art for an improved air inlet assembly for an auxiliary power unit.

EP 1 069 044 A2 discloses a prior art aircraft system as set forth in the preamble of claim 1.

US 6,264,137 B1 discloses a prior art inlet vortex bustor and ice protector for auxiliary power units.

### SUMMARY OF THE DISCLOSURE

According to an aspect of the present disclosure, an aircraft system is provided as recited in claim 1.

The door may extend vertically between a bottom end and a top end when the door is closed. The pivot axis may be at the top end.

The door may extend vertically between a bottom end and a top end when the door is closed. The air inlet assembly may include a hinge connected to the door at the top end.

The door may be generally horizontal in the open position.

A vertical stabilizer wing may be included and project vertically out from the aircraft fuselage. The air inlet assembly may be located aft of the vertical stabilizer wing.

There may be no straight line of sight into the inlet orifice from directly vertically above the inlet orifice when the door is in the open position.

The engine may include a compressor section, a turbine section and a combustor section between the compressor section and the turbine section.

The pivot axis may be a generally horizontal pivot axis.

The pivot axis may be substantially parallel with the longitudinal axis.

The pivot axis may be angularly offset from the longitudinal axis by no more than five or ten degrees.

The aircraft fuselage may extend along a longitudinal axis. The pivot axis may be generally parallel with the longitudinal axis.

The door may be configured to pivot about the generally horizontal pivot axis between the open position and the closed position during a first mode (e.g., during on ground operation). The door may be further configured to pivot about a second pivot axis between another open position and the closed position during a second mode (e.g., during in flight operation). The second pivot axis may be angularly offset from the generally horizontal pivot axis.

The foregoing features and the operation of the invention will become more apparent in light of the following description and the accompanying drawings.

### BRIEF DESCRIPTION OF THE DRAWINGS

FIG. 1 is a perspective diagrammatic illustration of an aircraft system for an aircraft.
FIG. 2 is a schematic illustration of a tail end portion of the aircraft system.
FIG. 3 is a schematic illustration of an auxiliary power unit (APU) configured as a gas turbine engine.
FIG. 4 is a perspective diagrammatic illustration of a tail end portion of the aircraft system.
FIG. 5 is a side schematic illustration of an air intake assembly for the auxiliary power unit with a door of the air intake assembly in a partially open position.
FIG. 6 is a partial sectional schematic illustration of the air intake assembly for the auxiliary power unit with the door in a closed position.
FIG. 7 is a partial sectional schematic illustration of the air intake assembly for the auxiliary power unit with the door in an open position.
FIG. 8 is a side schematic illustration of another air intake assembly for the auxiliary power unit with a door of the air intake assembly in a closed position.
FIGS. 9-11 are side sectional schematic illustrations of the door, where the door is configured to open to different maximum open positions.
FIG. 12 is an illustration of how an aircraft fuselage interacts with super-cooled water particles during flight.
FIG. 13 is a side schematic illustration of the air intake assembly for the auxiliary power unit with the door of the air intake assembly in another partially open position.

### DETAILED DESCRIPTION OF THE INVENTION

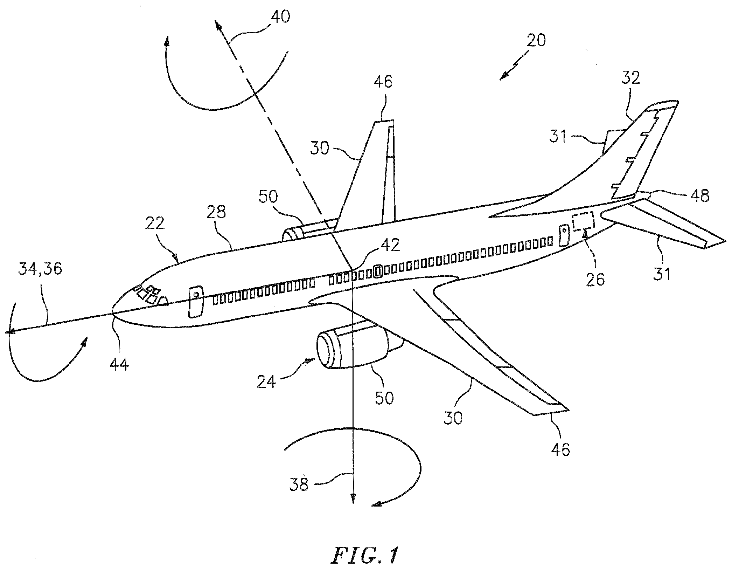

FIG. 1 illustrates an aircraft system 20 for an aircraft, for example an airplane such as a commercial airliner or a cargo plane. The aircraft system 20 includes an airframe 22, a propulsion system 24 and an auxiliary power system 26, which is shown in block diagram form.

The airframe 22 includes a fuselage 28 and a plurality of wings 30-32. The fuselage 28 forms a central body of the aircraft and has a horizontal longitudinal axis 34. Herein, the term "horizontal" is used to describe a gravitational orientation of an element (e.g., the longitudinal axis 34) when the aircraft is on ground and/or in level flight. The longitudinal axis 34 may be coaxial with a roll axis 36 of the aircraft.

Briefly, the aircraft includes a yaw axis 38, a pitch axis 40 and the roll axis 36. These axes 36, 38 and 40 are coincident at an origin 42, which may correspond to a center of gravity of the aircraft. The yaw axis 38 is perpendicular to a plane of the wings 30. The yaw axis 38 extends from the origin 42 in a direction towards a bottom of the aircraft; e.g., downwards. Yaw axis motion thereby results in side-to-side movement of a nose 44 of the aircraft. The pitch axis 40 is perpendicular to the yaw axis 38 and parallel to the plane of the wings 30. The pitch axis 40 extends from the origin 42 in a direction towards a tip 46 of one of the wings 30. Pitch axis motion thereby results in up and down movement of the aircraft nose 44. The roll axis 36 is perpendicular to the yaw axis 38 and the pitch axis 40. The roll axis 36 extends from the origin 42 in a direction towards the aircraft nose 44. Roll axis motion thereby results in up and down movement of the wing tips 46.

The plurality of wings 30-32 include one or more main or general lift wings 30, one or more horizontal stabilizer wings 31 and at least one vertical stabilizer wing 32. The main wings 30 are disposed on and connected to opposing sides of the fuselage 28. The horizontal stabilizer wings 31 are disposed on and connected to the opposing sides of the fuselage 28 at (e.g., on, adjacent or proximate) an aft, tail end 48 of the fuselage 28. The vertical stabilizer wing 32 projects vertically out from and is connected to the fuselage 28 at the tail end 48. Herein, the term "vertical" is used to describe a gravitational orientation of an element (e.g., the stabilizer wing 32) when the aircraft is on ground and/or in level flight. The vertical stabilizer wing 32 is generally aligned with the horizontal stabilizer wings 31 along the longitudinal axis 34.

The propulsion system 24 includes one or more gas turbine engines 50, each housed within a nacelle. Each of these gas turbine engines 50 may be mounted to a respective one of the main wings 30 by pylon structure. Each of the gas turbine engines 50 may be configured as a turbofan engine as shown in FIG. 1. Alternatively, each gas turbine engine 50 may be configured as a turbojet engine, a propfan engine, a pusher fan engine or any other type of gas turbine engine capable of propelling the aircraft.

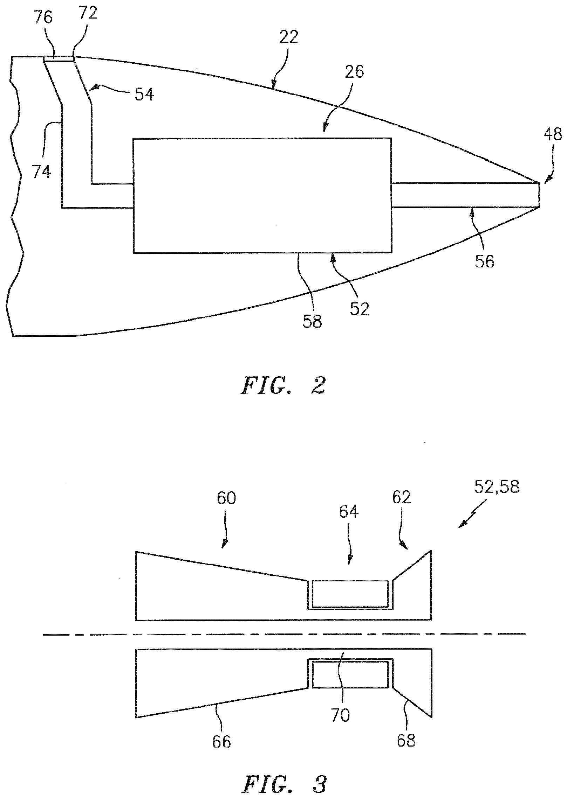

Referring to FIG. 2, the auxiliary power system 26 is configured to provide pneumatic, hydraulic and/or electrical power to the aircraft during propulsion system 24 startup, inflight emergency (e.g., loss of pneumatic, hydraulic and/or electrical power from the propulsion system 24), etc. However, during normal aircraft flight, the auxiliary power system 26 may be placed on standby or turned off.

The auxiliary power system 26 includes an auxiliary power unit 52, an air inlet assembly 54 and an exhaust 56. The auxiliary power unit 52 may be configured as or otherwise include a gas turbine engine 58. The auxiliary power unit 52 of FIG. 3, for example, is configured as a single spool / single shaft gas turbine engine. This auxiliary power unit 52 includes a compressor section 60, a turbine section 62 and a combustor section 64, which is located axially between and fluidly coupled with the compressor section 60 and the turbine section 62. One or more compressor rotors 66 in the compressor section 60 are connected to and driven by one or more turbine rotors 68 in the turbine section 62 through a shaft 70. The present disclosure, however, is not limited to the foregoing exemplary auxiliary power unit configuration. For example, in other embodiments, the auxiliary power unit 52 may include a gas turbine engine with two or more spools. In still other embodiments, the auxiliary power unit 52 may be configured as or otherwise include another (non-gas turbine) type of engine; e.g., a piston or rotary internal combustion engine.

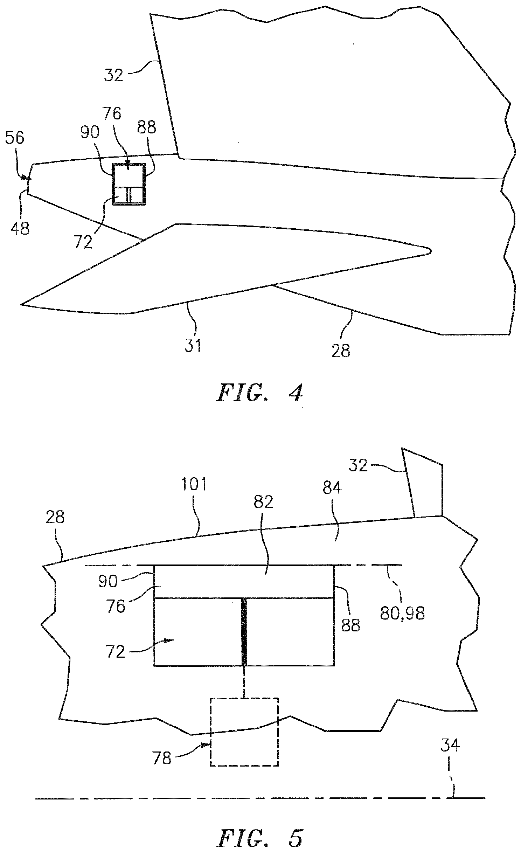

Referring again to FIG. 2, the air inlet assembly 54 includes an inlet orifice 72, an inlet duct 74 and a door 76. Referring now to FIG. 4, the inlet orifice 72 extends through an exterior skin (e.g., wall) of the fuselage 28 at the tail end 48. The inlet orifice 72 may be located on the side of the fuselage 28, aft of the vertical stabilizer wing 32 and/or aft of the horizontal stabilizer wings 31. The inlet orifice 72 may have a polygonal (e.g., rectangular) cross-sectional shape, or any other cross-sectional shape.

Referring to FIG. 2, the inlet duct 74 fluidly couples the inlet orifice 72 with an airflow inlet of the auxiliary power unit 52 and its engine 58.

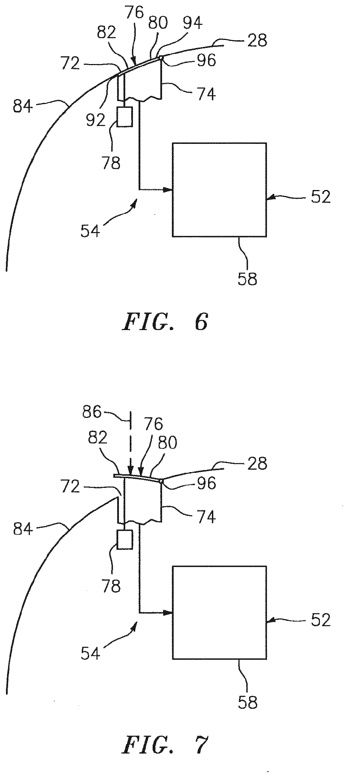

Referring to FIGS. 5-7, an actuator 78 (e.g., a hydraulic piston, a lead screw device, etc.) is configured to pivot the door 76 about a generally horizontal pivot axis 80 between a closed position (see FIG. 6) and an open position (see FIG. 7). When the door 76 is in the closed position (see FIG. 6), the door 76 is configured to substantially close the inlet orifice 72 such that little or no air enters the air inlet assembly 54 from outside of the fuselage 28. An exterior (e.g., planar or curved) surface 82 of the door 76 also aligns with an exterior surface 84 of the surrounding exterior skin of the fuselage 28 to reduce flow disturbances. The surface 82, for example, may be substantially flush with, or recessed into the fuselage 28 from, the surface 84.

When the door 76 is in the open position (see FIG. 7), the door 76 is configured to pivoted away from the inlet orifice 72 such that air from outside the fuselage 28 may travel through the air inlet assembly 54 to the auxiliary power unit 52. However, the door 76 is also configured to cover the inlet orifice 72 to reduce or prevent particles (e.g., rain water droplets, snow, etc.) from entering the air inlet assembly 54. In particular, the open door 76 is configured relative to the inlet orifice 72 such that there is no straight line of sight into the inlet orifice 72 from directly vertically above the inlet orifice 72; e.g., see blocked line of sight 86. As a result, the door 76 is operable to reduce or prevent formation of ice buildup at the inlet orifice 72 and/or within the inlet duct 74.

The door 76 has a cross-sectional shape that is approximately the same as the cross-sectional shape of the inlet orifice 72. The door 76 extends longitudinally along the longitudinal axis 34 of the fuselage 28 between an upstream, forward end 88 and a downstream, aft end 90; see FIG. 5. The door 76 also extends vertically (when the door 76 is closed) between a bottom end 92 and a top end 94; see FIG. 6.

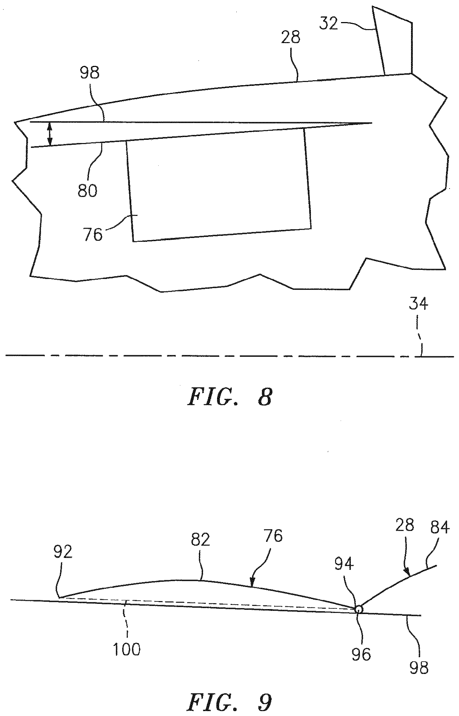

At least one hinge 96 may be connected to the door 76 at (e.g., on, adjacent or proximate) the top end 94, where that hinge 96 pivotally connects the door 76 to the fuselage 28 and/or a mounting portion of the air inlet assembly 54. The hinge 96 is configured such that the pivot axis 80 is substantially parallel with a gravitational horizontal horizon line 98 (see FIG. 5); e.g., substantially horizontal relative to gravity. However, in other embodiments, the pivot axis 80 may be angularly offset from the gravitational horizontal horizon line 98 by five or ten degrees as shown in FIG. 8 to align with the top ridge line of the fuselage 28.

With the foregoing configuration, the pivot axis 80 may be generally parallel with the longitudinal axis 34. For example, the pivot axis 80 may be substantially parallel with the longitudinal axis 34 (see FIG. 5). Alternatively, the pivot axis 80 may be angularly offset from the longitudinal axis 34 by five or ten degrees (see FIG. 8).

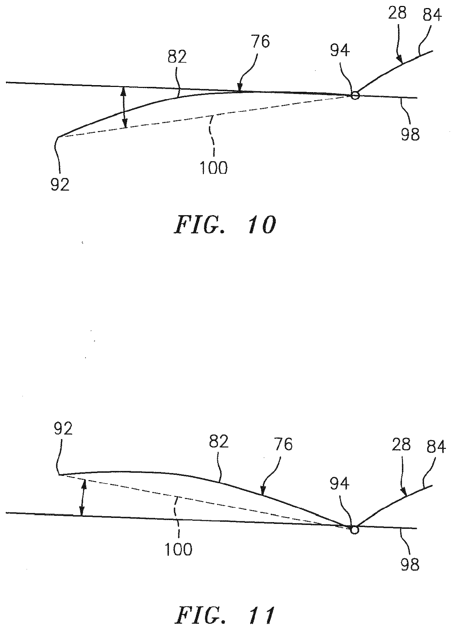

In some embodiments, referring to FIG. 9, the exterior surface 82 of the door 76 may be substantially horizontal when the door 76 is in the open position. For example, a top end to bottom end chord line 100 of the door 76 (where the exterior surface 82 is arcuate) may be substantially horizontal and parallel with the gravitational horizontal horizon line 98. In other embodiments, referring to FIG. 10, the bottom end 92 of the door 76 may be vertically below the top end 94 when the door 76 is in the open position. Thus, the exterior surface 82 may be sloped downward away from the fuselage 28; e.g., minus 5-10 degrees from horizontal. In still other embodiments, referring to FIG. 11, the bottom end 92 of the door 76 may be vertically above the top end 94 when the door 76 is in the open position. Thus, the exterior surface 82 may be sloped downward towards from the fuselage 28; e.g., plus 5-10 degrees from horizontal. In addition to covering the inlet orifice 72, the foregoing embodiments also facilitate removal of ice accumulation from the exterior surface 82 of the open door 76 using traditional de-icing techniques.

In some embodiments, referring to FIG. 5, the pivot axis 80 may be generally (e.g., slightly offset (e.g., 5-10 degrees) from or substantially) aligned with the top ridge line 101 of the fuselage 28, aft of the vertical stabilizer wing 32. The door 76 may be located on a left side or a right side fuselage 28 aft looking forward. The exterior surface 82 may be angled plus or minus 5-10 degrees about the longitudinal axis 34, and the exterior surface 82 may be angled 5-10 degrees about pitch axis 40 to have the same pitch angle with the top ridge line 101 of fuselage 28. The slanted exterior surface 82 also may utilize gravity to help in removal of ice accretion from the exterior surface 82 of the open door 76 using traditional de-icing techniques.

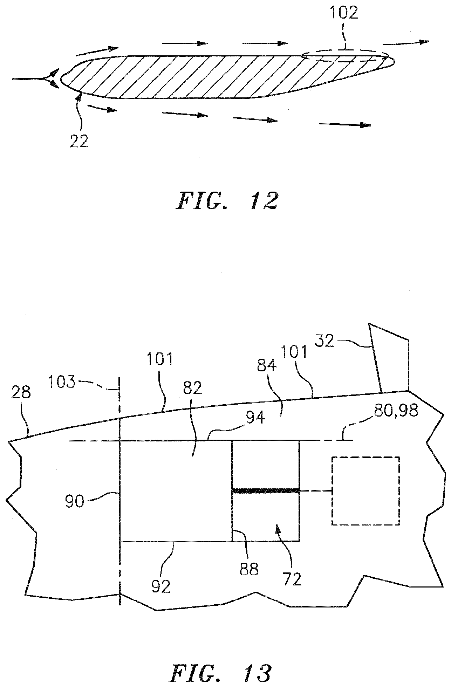

During certain conditions such as an engine flameout, loss of propulsion system 24 power, etc., the auxiliary power unit 52 may be operated during aircraft flight. The placement of the air inlet assembly 54 at the tail end 48 of the fuselage 28 may dispose the inlet orifice 72 within shadow zone 102 of the aircraft as shown in FIG. 12. As a result, most particles (e.g., rain water droplets, snow, etc.) in the air may flow around the inlet orifice 72 without entering the air inlet assembly 54.

In some embodiments, referring to FIG. 13, the door 76 can be configured to open to the front. For example, at least one additional hinge may be connected to the door 76 at the aft end 90, where that additional hinge pivotally connects the door 76 to the fuselage 28 and/or the mounting portion of the air inlet assembly 54. This additional hinge may be configured to pivot about another pivot axis 103 which is angularly offset from the pivot axis 80; e.g., substantially perpendicular to the pivot axis 80. With such a configuration, the door 76 may open during at least a first mode (e.g., when the aircraft is in flight) to the front using the additional hinge to provide a ram air effect for the inlet assembly 54. However, during at least another operating mode (e.g., when the aircraft is on the ground), the door 76 may open towards the side (e.g., see FIGS. 5 and 7) using the hinge 96 as described above.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims.

## Claims

1. An aircraft system (20), comprising:
an aircraft fuselage (28);
an auxiliary power unit (52) within the aircraft fuselage (28), and comprising an engine (58); and
an air inlet assembly(54) including an inlet orifice (72), an inlet duct (74) and a door (76), the inlet duct (74) fluidly coupling the inlet orifice (72) with an airflow inlet of the engine (58), and the door (76) configured to pivot about a generally horizontal pivot axis (80) between an open position and a closed position, wherein the door (76) opens the inlet orifice (72) in the open position and substantially closes the inlet orifice (72) in the closed position;
wherein the aircraft fuselage (28) has a horizontal longitudinal axis (34),
**characterised in that**
the pivot axis (80) is generally parallel with the horizontal longitudinal axis (34), or angularly offset from the horizontal longitudinal axis (34) by no more than ten degrees.

2. The aircraft system of claim 1, wherein the pivot axis (80) is angularly offset from the horizontal longitudinal axis (34) by no more than five degrees.

3. The aircraft system of any preceding claim, wherein the door (76) extends vertically between a bottom end (92) and a top end (94) when the door (76) is closed, and the pivot axis (80) is at the top end (94).

4. The aircraft system of any preceding claim, wherein the door (76) extends vertically between a bottom end (92) and a top end (94) when the door (76) is closed, and the air inlet assembly (54) further includes a hinge (96) connected to the door (76) at the top end (94).

5. The aircraft system of any preceding claim, wherein the door (76) is generally horizontal in the open position.

6. The aircraft system of any preceding claim, further comprising:
a vertical stabilizer wing (32) projecting vertically out from the aircraft fuselage (28);
wherein the air inlet assembly (54) is located aft of the vertical stabilizer wing (32).

7. The aircraft system of any preceding claim, wherein there is no straight line of sight into the inlet orifice (72) from directly vertically above the inlet orifice (72) when the door (76) is in the open position.

8. The aircraft system of any preceding claim, wherein the engine (58) comprises a compressor section (60), a turbine section (62) and a combustor section (64) between the compressor section (60) and the turbine section (62).

9. The aircraft system of any preceding claim, wherein
the door (76) is configured to pivot about the generally horizontal pivot axis (80) between the open position and the closed position during a first mode;
the door (76) is further configured to pivot about a second pivot axis (103) between another open position and the closed position during a second mode; and
the second pivot axis (103) is angularly offset from the generally horizontal pivot axis (80).

## Patentansprüche

1. Flugzeugsystem (20), umfassend:
einen Flugzeugrumpf (28);
ein Hilfstriebwerk (52) in dem Flugzeugrumpf (28) und umfassend ein Triebwerk (58); und
eine Lufteinlassanordnung (54), die eine Einlassdüse (72) einen Einlasskanal (74) und eine Tür (76) beinhaltet, wobei der Einlasskanal (74) die Einlassdüse (72) fluidisch mit einem Luftstromeinlass des Triebwerks (58) koppelt und die Tür (76) dazu ausgelegt ist, um eine im Allgemeinen horizontale Schwenkachse (80) zwischen einer offenen Position und einer geschlossenen Position zu schwenken, wobei die Tür (76) die Einlassdüse (72) in der offenen Position öffnet und die Einlassdüse (72) in der geschlossenen Position im Wesentlichen schließt;
wobei der Flugzeugrumpf (28) eine horizontale Längsachse (34) aufweist,
**dadurch gekennzeichnet, dass**
die Schwenkachse (80) im Allgemeinen parallel zu der horizontalen Längsachse (34) ist oder horizontal von der horizontalen Längsachse (34) um nicht mehr als zehn Grad winkelversetzt ist.

2. Flugzeugsystem nach Anspruch 1, wobei die Schwenkachse (80) von der horizontalen Längsachse (34) um nicht mehr als fünf Grad winkelversetzt ist.

3. Flugzeugsystem nach einem der vorangehenden Ansprüche, wobei sich die Tür (76) vertikal zwischen einem unteren Ende (92) und einem oberen Ende (94) erstreckt, wenn die Tür (76) geschlossen ist und die Schwenkachse (80) sich an dem oberen Ende (94) befindet.

4. Flugzeugsystem nach einem der vorangehenden Ansprüche, wobei sich die Tür (76) vertikal zwischen einem unteren Ende (92) und einem oberen Ende (94) erstreckt, wenn die Tür (76) geschlossen ist und die Lufteinlassanordnung (54) ferner ein Gelenk (96) beinhaltet, das mit der Tür (76) am oberen Ende (94) verbunden ist.

5. Flugzeugsystem nach einem der vorangehenden Ansprüche, wobei die Tür (76) in der offenen Position im Allgemeinen horizontal ist.

6. Flugzeugsystem nach einem der vorangehenden Ansprüche, ferner umfassend:
einen vertikalen Stabilisierungsflügel (32), der vertikal aus dem Flugzeugrumpf (28) hervorragt;
wobei sich die Lufteinlassanordnung (54) hinter dem vertikalen Stabilisierungsflügel (32) befindet.

7. Flugzeugsystem nach einem der vorangehenden Ansprüche, wobei keine gerade Sichtlinie in die Einlassdüse (72) von direkt vertikal über der Einlassdüse (72) vorhanden ist, wenn sich die Tür (76) in der offenen Position befindet.

8. Flugzeugsystem nach einem der vorangehenden Ansprüche, wobei das Triebwerk (58) einen Verdichterabschnitt (60), einen Turbinenabschnitt (62) und einen Brennkammerabschnitt (64) zwischen dem Verdichterabschnitt (60) und dem Turbinenabschnitt (62) umfasst.

9. Flugzeugsystem nach einem der vorangehenden Ansprüche, wobei
die Tür (76) dazu ausgelegt ist, in einem ersten Modus um die im Allgemeinen horizontale Schwenkachse (80) zwischen der offenen Position und der geschlossenen Position zu schwenken;
die Tür (76) ferner dazu ausgelegt ist, in einem zweiten Modus um eine zweite Schwenkachse (103) zwischen einer anderen offenen Position und der geschlossenen Position zu schwenken; und
die zweite Schwenkachse (103) von der im Allgemeinen horizontalen Schwenkachse (80) winkelversetzt ist.

## Revendications

1. Système d'avion (20), comprenant :
un fuselage d'avion (28) ;
une unité d'alimentation auxiliaire (52) à l'intérieur du fuselage d'avion (28), et comprenant un moteur (58) ; et
un ensemble d'entrée d'air (54) comportant un orifice d'entrée (72), une conduite d'entrée (74) et une porte (76), la conduite d'entrée (74) couplant fluidiquement l'orifice d'entrée (72) avec une entrée d'écoulement d'air du moteur (58), et la porte (76) étant configurée pour pivoter autour d'un axe de pivotement généralement horizontal (80) entre une position ouverte et une position fermée, dans lequel la porte (76) ouvre l'orifice d'entrée (72) dans la position ouverte et ferme sensiblement l'orifice d'entrée (72) dans la position fermée ;
dans lequel le fuselage d'avion (28) a un axe longitudinal horizontal (34),
**caractérisé en ce que**
l'axe de pivotement (80) est généralement parallèle à l'axe longitudinal horizontal (34), ou décalé angulairement de l'axe longitudinal horizontal (34) au plus de dix degrés.

2. Système d'aéronef selon la revendication 1, dans lequel l'axe de pivotement (80) est décalé angulairement de l'axe longitudinal horizontal (34) au plus de cinq degrés.

3. Système d'aéronef selon une quelconque revendication précédente, dans lequel la porte (76) s'étend verticalement entre une extrémité inférieure (92) et une extrémité supérieure (94) lorsque la porte (76) est fermée, et l'axe de pivotement (80) se trouve au niveau de l'extrémité supérieure (94).

4. Système d'aéronef selon une quelconque revendication précédente, dans lequel la porte (76) s'étend verticalement entre une extrémité inférieure (92) et une extrémité supérieure (94) lorsque la porte (76) est fermée, et l'ensemble d'entrée d'air (54) comporte en outre une charnière (96) reliée à la porte (76) au niveau de l'extrémité supérieure (94).

5. Système d'aéronef selon une quelconque revendication précédente, dans lequel la porte (76) est généralement horizontale dans la position ouverte.

6. Système d'aéronef selon une quelconque revendication précédente, comprenant en outre :
une aile de stabilisation verticale (32) faisant saillie verticalement hors du fuselage d'avion (28) ;
dans lequel l'ensemble d'entrée d'air (54) est situé à l'arrière de l'aile de stabilisation verticale (32).

7. Système d'aéronef selon une quelconque revendication précédente, dans lequel il n'y a pas de champ de vision direct dans l'orifice d'entrée (72) directement verticalement au-dessus de l'orifice d'entrée (72) lorsque la porte (76) est dans la position ouverte.

8. Système d'aéronef selon une quelconque revendication précédente, dans lequel le moteur (58) comprend une section de compresseur (60), une section de turbine (62) et une section de chambre de combustion (64) entre la section de compresseur (60) et la section de turbine (62).

9. Système d'aéronef selon une quelconque revendication précédente, dans lequel
la porte (76) est configurée pour pivoter autour de l'axe de pivotement généralement horizontal (80) entre la position ouverte et la position fermée pendant un premier mode ;
la porte (76) est en outre configurée pour pivoter autour d'un second axe de pivotement (103) entre une autre position ouverte et la position fermée pendant un second mode ; et
le second axe de pivotement (103) est décalé angulairement par rapport à l'axe de pivotement généralement horizontal (80).
